# FASCICULE DE BREVET EUROPEEN

(11) **EP 2 910 979 B1**
(45) Date de publication et mention de la délivrance du brevet: **03.04.2019**
(21) Numéro de dépôt: 15155254.4
(22) Date de dépôt: 16.02.2015
(51) Int. Cl.: G01V 3/15

(54) **Localisateur d'objets métalliques à interface de communication intégrée**
Detektor von Metallgegenständen mit integrierter Kommunikationsschnittstelle
Metal object locator with built-in communication interface

(30) Priorité: 20.02.2014 FR 1451349
(43) Date de publication de la demande: 26.08.2015
(73) Titulaire: SARL XPLORER, 31320 Castanet-Tolosan (FR)
(72) Inventeur: Loubet, Alain, 31120 Castanet-Tolosan (FR)
(74) Mandataire: Feray, Valérie

(56) Documents cités:
- WO-A2-2010/039242
- FR-A1- 2 759 173
- FR-A1- 2 916 055
- KR-A- 20130 106 949
- US-A- 5 696 490
- US-B1- 6 326 790

## Description

### DOMAINE DE L'INVENTION

L'invention se rapporte au domaine général des détecteurs de métaux électromagnétiques portatifs.

De tels détecteurs sont utilisés essentiellement pour le loisir, la recherche de monnaies, bijoux, trésors, mais aussi par les professionnels pour le déminage, les recherches en balistique, ou encore la recherche de tuyauteries ou de particules métalliques polluantes dans l'industrie et le secteur alimentaire.

### CONTEXTE DE L'INVENTION - ART ANTERIEUR

Il existe dans le commerce une grande variété de détecteurs de métaux, communément utilisés pour la recherche et la discrimination d'objets métalliques enterrés ou masqués par la végétation couvrant le sol.

Les détecteurs de métaux les plus communément utilisés, notamment pour le loisir, fonctionnent dans le domaine fréquentiel. Ils utilisent le principe maintenant bien connu de la mesure de phase entre un signal électromagnétique alternatif basse fréquence, émis par une bobine alimentée par une tension électrique, et le signal reçu par une autre bobine proche de la première. D'autres technologies alternatives moins répandues sont aussi employées, par exemple celle de type à induction puisée, qui travaillent non plus dans le domaine fréquentiel mais temporel.

Ces détecteurs de métaux, qualifiés pour des raisons de clarté de l'exposé de "détecteurs de métaux usuels" dans la suite du texte, sont habituellement composés de 3 parties:
- une tête de détection, ou disque de détection, généralement disposée dans un plan,
- une canne support, qui peut être ou non télescopique, à l'extrémité de laquelle est montée la tête de détection,
- un boîtier électronique de commande qui gère la mise en marche et l'arrêt du détecteur, qui génère le signal électrique d'excitation de la bobine émettrice logée dans la tête de détection et récupère et analyse le signal détecté par la bobine réceptrice et qui signal à l'opérateur via un affichage et un avertissement sonore qu'un objet a été détecté dans la zone de terrain couverte par la bobine de détection.

Le boitier de commande des détecteurs de métaux usuels est généralement relié à la tête de détection par une liaison filaire qui permet la transmission du signal d'excitation à la bobine qui équipe la tête de détection et la récupération, pour exploitation, du signal détecté par la tête de détection.

Très généralement aussi, ces détecteurs comportent un casque écouteur audio qui permet au boîtier électronique de transmettre à l'opérateur un signal audible lorsqu'un objet est détecté. L'avertisseur sonore présent sur le boitier peut alors être coupé, pour des raisons de discrétion notamment.

Selon le dispositif considéré, le boitier de commande peut être fixé sur la canne support. Alternativement, il peut être configuré pour être porté à la ceinture ou en bandoulière dans un étui ou une sacoche appropriés.

Il existe à l'heure actuelle sur le marché des détecteurs de métaux usuels équipés en outre d'une liaison radio permettant au boitier de commande de transmettre par liaison sans fil un signal audio de détection à un casque équipé d'un récepteur radio.

Il existe également sur le marché des détecteurs de métaux équipés de liaisons radio multipoints permettant de se passer de toute liaison filaire, le boitier de commande gérant par liaison radio l'ensemble des éléments du détecteur décrits précédemment. La liaison radio multipoints est par ailleurs configurée de façon à permettre à la tête de détection d'être pilotée indifféremment par le boitier de commande, ou, en l'absence de ce dernier, par le casque opérateur. Un tel équipement est notamment décrit dans le brevet français publié sous la référence FR2916055 et détenu par la demanderesse.

Ce type d'équipement présente l'avantage d'une grande modularité, dans la mesure où le protocole qui gère les liaisons radio permet selon une configuration choisie par l'opérateur, ou implicitement déterminée par les éléments du détecteur en service à l'instant considéré, de faire communiquer les différents éléments (considérés comme des abonnés sur la liaison radio) les uns avec les autres, de façon à assurer la meilleure ergonomie possible pour l'opérateur tout en assurant toujours la fonction principale de détection.

De manière générale les détecteurs usuels proposés sur le marché présentent généralement une sensibilité satisfaisante, de sorte que dès qu'on s'approche d'un objet d'intérêt, ils réagissent en signalant à l'opérateur par une indication optique ou sonore qu'un objet a été détecté dans la zone couverte par le champ électromagnétique établi par la bobine de la tête de détection.

Cependant, ces détecteurs offrent une localisation des cibles très approximative, et ne permettent pas de cibler exactement la position de l'objet. Pour accéder à cet objet et s'en saisir on est généralement obligé de laisser de côté le détecteur et de dégager, un peu en aveugle, la zone où l'objet est présumé se trouver et, si nécessaire, de creuser le sol.

Dans un tel contexte pour faciliter cette phase finale de la récupération de l'objet détecté, on peut avoir recours, pour localiser précisément l'objet, à un détecteur "de poche", ou pointeur, présentant une tête de détection de faible diamètre à l'intérieur de laquelle est placée une bobine de détection et des dimensions comparables à celles d'une lampe torche, que l'on déplace au-dessus de la zone présomptive tandis que l'on dégage la végétation et/ou la couche de sol qui recouvre l'objet.

Un tel dispositif localisateur, communément appelé "Pinpointer" selon sa dénomination anglo-saxonne présente l'intérêt, du fait de ses faibles dimensions, de pouvoir être déplacé facilement au plus près du terrain sur la zone déterminée au moyen du détecteur de métaux principal auquel il est associé. Par ailleurs, du fait de la géométrie et des dimensions de sa tête électromagnétique, il présente l'avantage de couvrir une zone de détection étroite autour de la direction pointée, de sorte qu'il offre une grande précision de localisation. On évite ainsi, avantageusement, de dégager inutilement une zone de terrain trop importante.

Pour des raisons de clarté de la suite de l'exposé, un tel localisateur de proximité sera qualifié de "pointeur" dans le texte qui suit, en référence à terminologie anglo-saxonne.

Il existe sur le marché différents modèles de pointeurs qui mettent en oeuvre des moyens de détection similaires dans leur fonctionnement à ceux mis en oeuvre par des détecteurs de métaux usuels, tels que ceux décrits précédemment. Ces pointeurs présentent généralement une interface utilisateur rudimentaire qui se limite à un témoin de mise en marche et a des moyens pour signaler la détection d'une cible à l'opérateur, moyens dont l'action se résume à l'émission d'un son d'avertissement émis par un buzzer, accompagnée généralement de la mise en vibration de la paroi de l'appareil.

Par suite, quand pour des raisons de discrétion vis-à-vis de l'entourage l'opérateur décide de couper l'émission sonore produite par le buzzer, la détection d'un objet est seulement signalée par la vibration des parois du pointeur. Or contrairement au signal émis par le buzzer dont l'intensité peut être modulée en fonction de l'intensité du signal reçu, la vibration générée par le pointeur ne rend compte de l'intensité du signal détecté que très approximativement. Le pointeur est alors d'un emploi plus délicat.

Les pointeurs présentent en outre un fonctionnement autonome, indépendant de tout autre équipement de détection. Par suite, dans un contexte de recherche d'objets sur une zone donnée, on utilise d'abord un détecteur usuel, qui fait office de détecteur principal, pour procéder à la détection de la présence éventuelle d'objets. Puis lorsque la présence d'un objet est détectée, on utilise un pointeur pour déterminer précisément l'endroit où se situe l'objet dans la zone de détection couverte par la tête de détection du détecteur principal. Les deux dispositifs sont ainsi mis en oeuvre indépendamment l'un de l'autre, de sorte que, lorsque l'on utilise alternativement l'un ou l'autre de ces équipements de détection, il convient de faire attention aux perturbations de fonctionnement que peuvent générer ces deux équipements l'un vis-à-vis de l'autre, s'ils sont actifs simultanément. Dans un tel contexte, l'opérateur est généralement contraint de mettre hors service l'un des deux moyens de détection, soit en invalidant le signal de détection produit par le détecteur principal, non utilisé à l'instant considéré, soit en coupant l'alimentation de ce dernier.

Ainsi, dans tous les cas, lorsqu'il utilise son localisateur de proximité, son pointeur, l'opérateur dispose seulement d'un appareil de localisation isolé, sans interaction fonctionnelle possible avec le détecteur principale ayant servi à détecter la présence proche d'un objet. Le pointeur ne peut alors bénéficier d'aucune des fonctionnalités qui peuvent être offertes par ce dernier, notamment dans le cas où le détecteur principal utilisé est équipé d'une liaison radio permettant à certains de ses éléments d'échanger des informations, comme c'est le cas des détecteurs de métaux équipés de casques à liaison sans fil, ou des détecteurs équipés d'une liaison radio multipoints, tels que ceux mentionnés précédemment.

### PRESENTATION DE L'INVENTION

Un but de l'invention est de proposer un équipement de localisation d'objets métalliques comportant un localisateur de proximité, ou pointeur, capable de fonctionner de manière au moins partiellement intégrée avec un détecteur de métaux usuel disposant au moins d'une liaison radio entre son boitier de commande et un casque opérateur.

Un autre but de l'invention est de proposer un équipement de localisation d'objets métallique complet, intégrant fonctionnellement dans la plus large mesure un pointeur.

A cet effet, selon un premier aspect qui ne fait pas partie de l'invention, il est décrit un équipement de localisation d'objets métalliques portable et intelligent, comportant un localisateur de proximité, ou pointeur, ledit pointeur comportant une bobine de détection capable d'émettre une onde électromagnétique et de détecter les ondes électromagnétiques qui lui sont transmises, ainsi que des moyens de commande capables de générer le signal d'excitation de la bobine de détection, de réaliser la détection d'échos provenant d'objets métalliques à partir des signaux électromagnétiques détectés par la bobine de détection et d'avertir l'opérateur lorsqu'une détection est réalisée.

Selon ce premier aspect, les moyens de commande du pointeur comportent en outre des moyens de communication radioélectriques configurés pour transmettre des informations à un équipement distant comportant des moyens de communications fonctionnellement compatibles des moyens de communication du dispositif selon l'invention.
- Selon une variante de réalisation du pointeur du dispositif selon ce premier aspect, les informations transmises par les moyens de commande consistent en un signal indiquant la détection d'un objet dans la direction pointée par le pointeur.
- Selon une autre variante de réalisation de ce même pointeur, les informations transmises par les moyens de commande comportent également des informations relatives à l'état de fonctionnement et à la configuration fonctionnelle du pointeur lui-même.
- selon un mode de réalisation particulier du dispositif selon le premier aspect, les moyens de communication radioélectriques du pointeur sont en outre configurés pour recevoir des commandes envoyées par l'équipement distant.
- Selon une variante de ce mode de réalisation, les informations reçues par les moyens de commande du pointeur comportent des commandes de mise en marche et d'arrêt de l'émission réalisée par ce dernier.
- Selon une autre variante de ce mode de réalisation, les informations reçues par les moyens de commande du pointeur comportent des commandes de configuration de l'émission réalisée par ce dernier.
- selon un mode de réalisation particulier, le dispositif selon le premier aspect comporte également un casque opérateur, équipé de moyens de communication radioélectriques configurés pour pouvoir établir une liaison radioélectrique en réception (unidirectionnelle) ou en émission/réception (bidirectionnelle) avec le pointeur.
- Selon une variante de ce mode de réalisation, le pointeur du dispositif selon l'invention est configuré pour transmettre au casque opérateur un signal indiquant la détection d'un objet dans la direction pointée.
- Selon une variante de ce mode de réalisation, le casque opérateur est en outre équipé d'une entrée audio permettant de le relier au boitier de commande et de contrôle d'un détecteur de métaux usuel équipé d'une sortie audio à destination d'un casque opérateur.
- Selon une variante de ce mode de réalisation, le casque opérateur est configuré pour sélectionner, de manière automatique ou sur commande de l'opérateur, le signal de détection transmis par radio par le pointeur ou le signal de détection audio transmis par le boitier de commande du détecteur de métaux par l'intermédiaire d'un câble de liaison audio.
- Selon une autre variante de ce mode de réalisation, le casque opérateur est en outre équipé de moyens de communication radioélectriques, configurés pour pouvoir établir une liaison radioélectrique en réception ou en émission/réception avec le boitier de commande et de contrôle d'un détecteur de métaux principal comportant des moyens de communications fonctionnellement compatibles des moyens de communication du casque opérateur.
- Selon une autre variante de ce mode de réalisation, le casque opérateur comporte en outre des moyens de contrôle et de commande permettant de transmettre au pointeur par liaison radioélectrique un ordre de mise en marche ou des commandes de configuration de fonctionnement.
- Selon un mode de réalisation particulier du dispositif, les moyens de commande du pointeur comportent en outre des moyens de communication radioélectriques configurés pour permettre l'intégration dudit pointeur à un système comportant un réseau de communication sans fil multipoints, de telle façon que le pointeur soit vu comme un abonné de ce réseau capable de transmettre ou de recevoir des informations à d'autres abonnés de ce réseau.
- Selon une variante de réalisation les moyens de commande du pointeur du dispositif selon l'invention comportent des moyens pour réaliser une liaison de type Bluetooth™ permettant d'échanger des informations avec un dispositif équipé d'une telle liaison.

Selon un second aspect, l'invention a pour objet un détecteur de métaux selon la revendication 1. Le détecteur de métaux est du type comportant:
- une canne support,
- une tête de détection placée à l'extrémité de la canne support, ladite comportant une bobine émettrice et une bobine réceptrice, la bobine émettrice étant alimentée par un signal d'excitation,
- un boîtier électronique de commande et de contrôle permettant de mettre en oeuvre la tête de détection et d'exploiter les informations provenant de cette dernière,
- un casque opérateur permettant au détecteur de métaux de transmettre à l'opérateur un signal audio de détection;
   les différents éléments étant reliés les uns aux autres par une liaison sans fil multipoints; ledit détecteur de métaux comportant en outre des moyens annexes constitués par un équipement de localisation d'objets métalliques, dont les moyens de liaison radioélectriques sont configurés de telle façon que le pointeur de cet équipement soit vu comme un abonné de la liaison sans fil multipoint.
- Selon une variante de réalisation, la liaison sans fil multipoint dudit détecteur de métaux est configurée de façon à ce que le pointeur de l'équipement de localisation d'objets métalliques selon l'invention puisse échanger des informations, soit exclusivement avec le boitier de commande et de contrôle du détecteur de métaux, soit directement avec le casque opérateur du même détecteur soit indifféremment, suivant le mode de fonctionnement choisi avec l'un ou l'autre de ces éléments.
- Selon une autre variante de réalisation, le boitier de commande et de contrôle du détecteur de métaux est configuré de façon à ce que le pointeur de l'équipement de localisation d'objets métalliques selon l'invention puisse communiquer avec des équipements externes via ce boitier.
- Selon une autre variante de réalisation, les informations transmises par le pointeur de l'équipement de localisation d'objets métalliques selon l'invention comportent des informations demandant la non-prise en compte du signal de détection transmis par la tête de détection du détecteur de métaux auquel il est intégré en tant que moyen annexe.
- Selon une autre variante de réalisation, les informations transmises par le pointeur de l'équipement de localisation d'objets métalliques selon l'invention comportent des informations demandant la mise à l'arrêt de l'émission réalisée par la tête de détection du détecteur de métaux auquel il est intégré en tant que moyen annexe.
- Selon une variante de réalisation, les moyens de commande du pointeur de l'équipement de localisation d'objets métalliques du détecteur de métaux selon l'invention sont configurés de façon à assurer certaines des fonctions du boitier de commande et de contrôle dudit détecteur de métaux pour se substituer à ce dernier.

L'équipement de localisation peut ainsi avantageusement être utilisé seul en tant que localisateur d'objets métalliques, ou détecteurs de métaux de proximité, ou encore être associé plus ou moins étroitement au fonctionnement d'un détecteur de métaux dit principal. Dans cette dernière utilisation il peut avantageusement remplacer certains des éléments dudit détecteur de métaux principal et en assurer les fonctions.

### DESCRIPTION DES FIGURES

Les caractéristiques et avantages de l'invention seront mieux appréciés grâce à la description qui suit, description qui s'appuie sur les figures annexées qui présentent:
- la figure 1, une vue de face (1-a) et une vue latérale (1-b) du pointeur de l'équipement de localisation d'objets métalliques dans une forme de réalisation particulière présentée à titre d'exemple;
- la figure 2 une représentation schématique de l'équipement de localisation d'objets métalliques dans la configuration comportant un pointeur et un casque opérateur, le casque opérateur étant représenté avec son écouteur gauche en premier plan;
- la figure 3, une représentation schématique de l'équipement de localisation d'objets métalliques selon l'invention dans la configuration de la figure 2, le casque opérateur étant représenté avec son écouteur droit en premier plan;
- la figure 4, une illustration représentant l'équipement de localisation d'objets métalliques intégré à un détecteur de métaux usuel qualifié de détecteur principal;
- les figures 5 et 6, une illustration représentant un premier exemple de mise en oeuvre de l'équipement de localisation d'objets métalliques avec un détecteur de métaux principal;
- les figures 7 et 8, une illustration représentant un second exemple de mise en oeuvre de l'équipement de localisation d'objets métalliques avec un détecteur de métaux principal;

### DESCRIPTION DETAILLEE

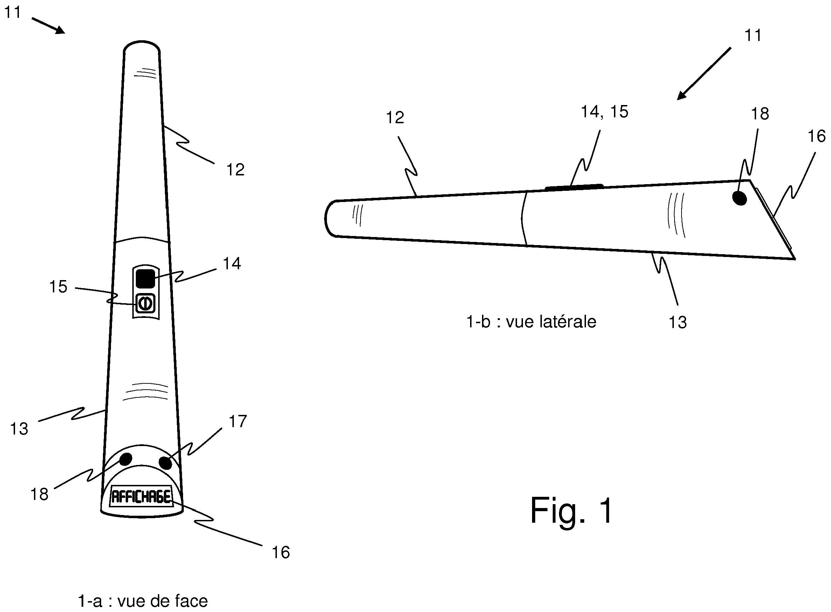

Comme l'illustre la figure 1, un dispositif comporte un localisateur de proximité 11, ou pointeur, plus connu sous la dénomination anglo-saxonne de "Pinpointer".

Le pointeur 11 comporte, de manière connue, une extrémité 12 dans laquelle est logée la bobine de détection et une zone de préhension 13, un manche, par lequel l'opérateur tient le pointeur 11 en main, corps qui contient notamment les batteries qui alimentent le pointeur.

Sur le manche 13 sont placés des moyens permettant d'utiliser le pointeur comme un "Pinpointer" conventionnel, en particulier un bouton marche/arrêt 14 permettant de mettre le pointeur sous tension, ainsi qu'un buzzer émettant un signal sonore signifiant à l'opérateur la détection d'un objet, signal dont le niveau sonore peut être ajusté, au moyen d'une commande de niveau 15 par exemple, et que des moyens permettant la mise en vibration du manche 13 du pointeur, vibration destinée notamment à alerter l'opérateur de la détection d'un objet dans le cas où ce dernier, pour des raisons de discrétion en particulier, a décidé d'inhiber le signal sonore.

Cependant, à la différence des dispositifs disponibles dans le commerce, ce pointeur comporte également des moyens de commande et de contrôle associés à des moyens de communication par liaison radioélectrique. Ces moyens, non visibles sur la figure, sont préférentiellement logés dans le manche 13.

Il comporte également une interface opérateur, également logée au niveau du manche 13, qui permet, après mise sous tension du pointeur 11, d'activer la liaison radioélectrique de telle sorte que le pointeur 11 puisse échanger des informations avec un équipement distant comportant des moyens de communication compatibles de ceux qui l'équipent.

Cette interface est par exemple constituée d'un ou plusieurs boutons de commande 17, 18 permettant d'accéder aux différentes fonctionnalités pouvant être mises en oeuvre par les moyens de commande et de contrôle, ainsi que d'un affichage 16 permettant à l'opérateur de prendre connaissance des différentes informations délivrées par les mêmes moyens de commande et de contrôle.

Les moyens de commande et de contrôle, ainsi que les moyens de communication qui leurs sont associés, peuvent, selon le mode de réalisation considéré, être configurés de façon à effectuer des opérations plus ou moins complexes.

Ainsi, par exemple, les moyens de commande et de contrôle peuvent être configurés de façon à assurer un fonctionnement et une exploitation autonomes du pointeur 11 et à transmettre seulement, par l'intermédiaire de la liaison radioélectrique, une information de détection qui peut par exemple prendre la forme d'un bip de durée donnée ou d'un signal acoustique dont la durée correspond à celle durant laquelle la détection d'un objet a lieu.

De même, dans un autre mode de réalisation, les moyens de commande et de contrôle peuvent être configurés de façon à assurer également la transmission d'informations d'état qui indiquent par exemple la fréquence de fonctionnement du pointeur 11 ou encore l'état de charge des batteries qui l'alimentent.

De même encore, dans un autre mode de réalisation, les moyens de commande et de contrôle peuvent être configurés de façon à assurer également la réception d'informations de commande provenant d'un équipement distant, la commande de marche et d'arrêt de l'émission du pointeur 11, ou la commande de sa fréquence d'émission par exemple.

Selon l'équipement avec lequel le pointeur 11 échange des informations, la liaison radioélectrique mise en oeuvre est de nature variable. C'est préférentiellement une liaison utilisant un protocole de communication standard, une liaison Bluetooth ™ ou une liaison wifi ™ par exemple. Cependant, ce peut également être une liaison mettant en oeuvre un protocole spécifique, permettant au pointeur 11 de communiquer avec l'équipement ou le système considéré, un système mettant en communication radio différents équipements au sein d'un réseau privé par exemple.

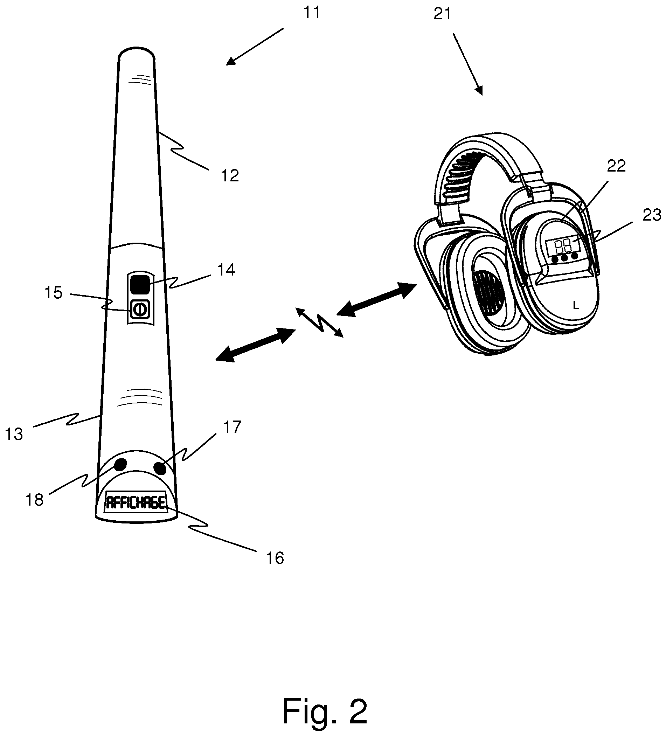

Outre le pointeur 11, tel que décrit dans le texte précédent, le dispositif peut également comporter, selon une configuration particulière, illustrée notamment par la figure 2, un casque opérateur 21 équipé de moyens de communication radioélectriques configurés pour être compatibles, en termes de forme d'onde et de protocole de communication, des moyens de communication radioélectriques qui équipent le pointeur 11.

Le casque opérateur 21 peut selon les cas et selon la configuration du pointeur auquel il est associé, disposer simplement de moyens de communication lui permettant de recevoir par radio un bip de détection émis par le pointeur, ou bien disposer de moyens de communications plus sophistiqués, associés à une interface utilisateur appropriée 22, permettant par exemple à l'opérateur de mettre en marche ou de couper l'excitation de la bobine du pointeur 11, d'inhiber le buzzer monté sur ce dernier ou encore de commander la fréquence du signal d'excitation et de visualiser sur un afficheur 23 la configuration de fonctionnement du pointeur11.

Dans cette configuration, l'opérateur dispose ainsi d'un ensemble autonome pointeur - casque qui lui permet par exemple d'inhiber le buzzer du pointeur 11 de façon à opérer de manière discrète, tout en recevant dans le casque 21, sous forme d'un bip sonore d'amplitude ou de fréquence de répétition variable par exemple, le signal d'avertissement généré par ce dernier lorsqu'un objet métallique est détecté.

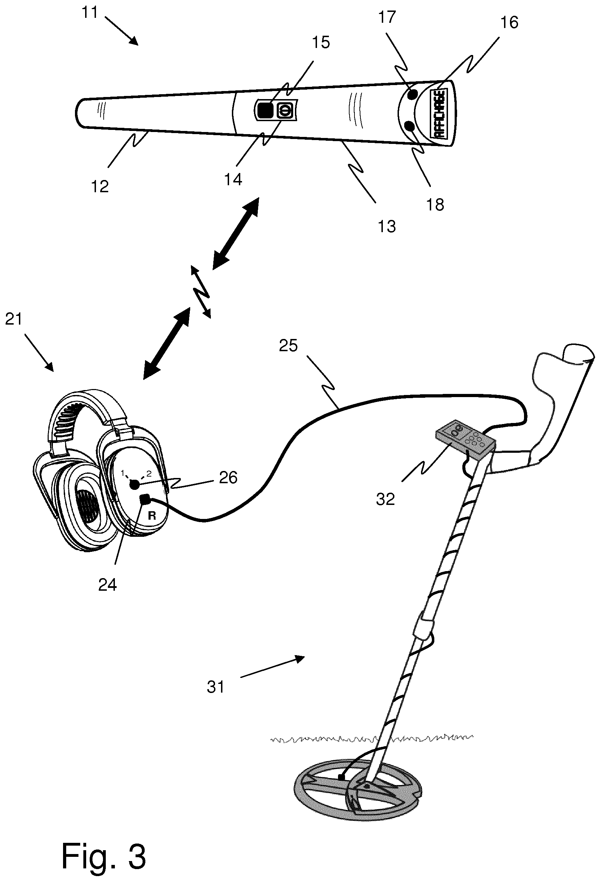

Dans une forme de réalisation particulière, illustrée par la figure 3, le casque opérateur 21 peut par ailleurs comporter une entrée audio 24 permettant à l'opérateur de relier son casque, au moyen d'un câble 25, à la sortie audio d'un équipement donné, le boitier de commande 32 d'un détecteur de métaux classique 31 par exemple. Il est alors préférentiellement pourvu d'une commande de commutation, une commande tactile ou encore une commande par commutateur 26 comme illustré par la figure 3, permettant à l'opérateur de sélectionner la source sonore raccordée aux écouteurs du casque: la voie audio transmise par le câble 25 ou la liaison radioélectrique avec le pointeur 11.

Dans une telle forme de réalisation le casque opérateur peut également être configuré pour inhiber automatiquement l'entrée audio à partir du moment où il est en liaison radio avec le pointeur 11. Dans ce cas, la réception des signaux de détection pouvant provenir du pointeur 11 est par défaut prioritaire si ce dernier est en marche, excepté si l'opérateur en décide autrement.

Dans sa configuration où il comporte à la fois un pointeur 11 et un casque opérateur 21, le dispositif peut être utilisé seul, indépendamment de tout autre équipement, le bip sonore caractérisant la détection d'un objet étant alors transmis au casque opérateur par la liaison radio plutôt que d'être émis par le buzzer qui équipe le pointeur 11, de sorte que l'opérateur peut procéder à ses recherches en toute discrétion, sans importuner son entourage.

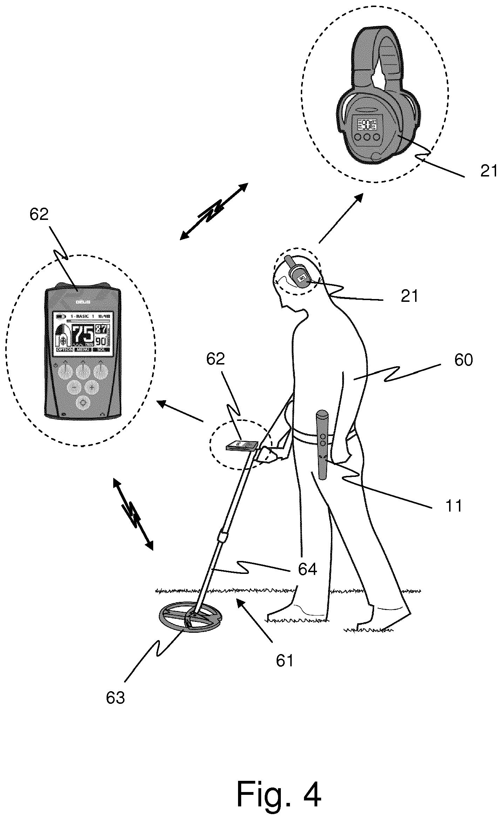

Cependant, comme illustré par la figure 4, l'équipement peut être avantageusement intégré au fonctionnement d'un système plus large, tel qu'un détecteur de métaux sans fil 61 équipé d'une liaison radio multipoints reliant les divers éléments constituant le détecteur, pour autant que cette liaison soit compatible de la liaison radioélectrique reliant le casque opérateur 21 au pointeur 11 du de l'équipement de localisation selon l'invention.

Dans tel mode de fonctionnement, le casque opérateur 21 peut être configuré, comme illustré par la figure 4, pour se substituer au casque habituellement utilisé par l'opérateur dans le cadre de la mise en oeuvre du détecteur de métaux sans fil 61.

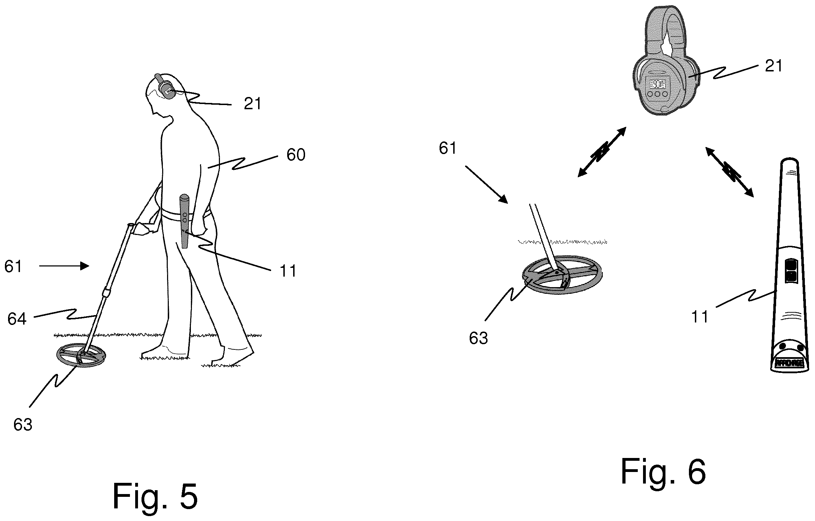

Il peut en outre être configuré pour se substituer, dans le contexte d'un mode de fonctionnement simplifié du détecteur de métaux principal 61, au boitier de commande 62 et piloter directement le disque de détection 63 et le pointeur 11, comme illustré par les figures 5 et 6.

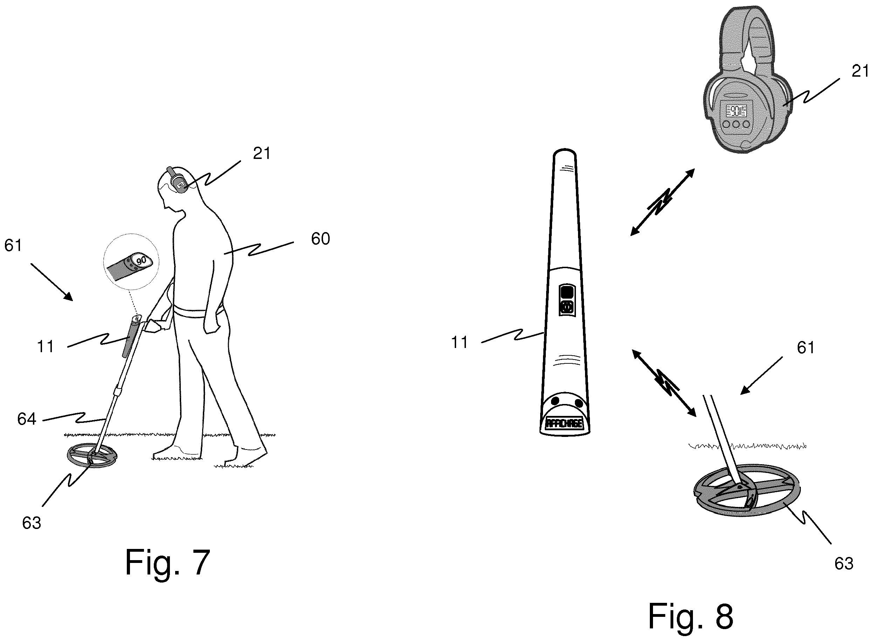

De même, dans tel mode de fonctionnement, le pointeur 11 peut être configuré, comme illustré par les figures 7 et 8, pour se substituer au boitier de commande 62 et gérer à la fois le fonctionnement du disque de détection 63 et celui de sa propre bobine de détection, en faisant par exemple fonctionner de manière alternative soit le disque de détection 63, soit sa bobine de détection, ou en ne traitant que les signaux de détection émis par l'une ou l'autre des têtes de détection selon le choix de l'opérateur 60. Les informations de détection provenant de la bobine de détection du pointeur 11 ou du disque de détection 63 du détecteur de métaux 61 sont alors, par exemple, gérées par les moyens de commande et de contrôle du pointeur 11 et transmises au casque opérateur 21 sous forme d'un bip sonore. De même les informations de configuration de l'ensemble de l'équipement sont alors gérées par les moyens de commande et de contrôle du pointeur 11 et affichées au niveau de l'afficheur 16 qui équipe ce dernier.

## Revendications

1. Détecteur de métaux, du type comportant:
- une canne support (64),
- une tête de détection (63) placé à l'extrémité de la canne support (64), ladite tête de détection comportant une bobine émettrice et une bobine réceptrice, la bobine émettrice étant alimentée par un signal d'excitation,
- un boîtier électronique de commande et de contrôle (62) permettant de gérer le fonctionnement de la tête de détection (63) et d'exploiter les informations provenant de cette dernière,
- un casque opérateur (21) permettant au détecteur de transmettre à l'opérateur un signal audio de détection,
le boîtier électronique de commande et de contrôle (62) et le casque opérateur (21) étant reliés l'un à l'autre par une liaison sans fil multipoints,
**caractérisé en ce qu'**il comporte en outre un localisateur de proximité (11), ou pointeur (11), comportant lui-même une bobine de détection, ainsi que des moyens de commande configurés pour générer un signal d'excitation et de transmettre ledit signal à sa propre bobine de détection, de réaliser la détection d'échos provenant d'objets métalliques à partir des signaux électromagnétiques détectés par sa bobine de détection, et de signaler à l'opérateur qu'une détection est réalisée;
les moyens de commande étant pourvus de moyens de communication radioélectriques configurés de telle façon que le pointeur (11) puisse être relié à la liaison sans fil multipoints pour être vu comme un abonné de la liaison sans fil multipoints capable de transmettre des informations à d'autres abonnés de cette liaison ou de recevoir des informations d'autres abonnés.

2. Détecteur de métaux selon la revendication 1,**caractérisé en ce que** la liaison sans fil multipoints est configurée de façon à ce que le pointeur (11) puisse échanger des informations, via la liaison sans fil multipoints, soit avec le boitier de commande et de contrôle (62) dudit détecteur de métaux, soit avec le casque opérateur (21), soit indifféremment, suivant le mode de fonctionnement choisi, avec l'un ou l'autre de ces éléments.

3. Détecteur de métaux selon l'une des revendications 1 ou 2, **caractérisé en ce que** son boitier de commande et de contrôle (62) est configuré de façon à ce que le pointeur (11) puisse communiquer avec des équipements externes via ce boitier (62).

4. Détecteur de métaux selon l'une quelconque des revendications 1 à 3, **caractérisé en ce que** les informations transmises par le pointeur (11) comportent des informations demandant la non-prise en compte du signal de détection transmis par la tête de détection (63) du détecteur de métaux (61).

5. Détecteur de métaux selon l'une quelconque des revendications 1 à 3, **caractérisé en ce que** les informations transmises par le pointeur (11) comportent des informations demandant la mise à l'arrêt de l'émission réalisée par la tête de détection (63) du détecteur de métaux (61).

6. Détecteur de métaux selon l'une quelconque des revendications 1 à 5, **caractérisé en ce que** les moyens de commande du pointeur (11) sont configurés de façon à assurer au moins certaines des fonctions du boitier de commande et de contrôle (62) dudit détecteur de métaux (61) pour se substituer à ce dernier.

7. Détecteur de métaux selon l'une quelconque des revendications précédentes, **caractérisé en ce que** les informations transmises par les moyens de commande du pointeur (11) au casque opérateur (21) consistent en un signal indiquant la détection d'un objet dans la direction pointée par le pointeur (11).

8. Détecteur de métaux selon la revendication 7, **caractérisé en ce que** les informations transmises par les moyens de commande du pointeur (11) au casque opérateur (21) comportent également des informations relatives à l'état de fonctionnement et à la configuration fonctionnelle dudit pointeur.

9. Détecteur de métaux selon l'une des revendications 7 ou 8, **caractérisé en ce que** le casque opérateur (21) comporte des moyens pour sélectionner, de manière automatique ou sur commande de l'opérateur, le signal de détection transmis par les moyens de commande du pointeur (11) ou le signal de détection transmis par le boitier de commande (32) du détecteur de métaux (31).

10. Détecteur de métaux selon l'une quelconque des revendications précédentes, **caractérisé en ce que** la liaison sans fil multipoints est une liaison de type Bluetooth™.

## Patentansprüche

1. Metalldetektor des Typs, aufweisend:
- eine Haltestange (64),
- einen am Ende der Haltestange (64) platzierten Detektionskopf (63), wobei der Detektionskopf eine Sendespule und eine Empfangsspule aufweist, wobei die Sendespule von einem Erregungssignal versorgt wird,
- einen elektronischen Steuer- und Kontrollkasten (62), der erlaubt, die Funktion des Detektionskopfs (63) zu verwalten und die von ihm kommenden Informationen auszuwerten,
- ein Bedienerheadset (21), welches es dem Detektor erlaubt, dem Bediener ein Audio-Detektionssignal zu übertragen,
wobei der elektronische Steuer- und Kontrollkasten (62) und das Bedienerheadset (21) durch eine drahtlose Multipunkt-Verbindung miteinander verbunden sind,
**dadurch gekennzeichnet, dass** er ferner einen Proximitätslokalisator (11) oder Pointer (11) aufweist, der selbst eine Detektionsspule sowie Steuermittel aufweist, die konfiguriert sind, um ein Erregungssignal zu erzeugen und das Signal an seine eigene Detektionsspule zu übertragen, um die Detektion von Echos, die von Metallobjekten kommen, ausgehend von den elektromagnetischen Signalen, die von seiner Detektionsspule ermittelt wurden, durchzuführen und um dem Bediener zu signalisieren, dass eine Detektion durchgeführt ist,
wobei die Steuermittel mit funkelektrischen Kommunikationsmitteln ausgestattet sind, die derart konfiguriert sind, dass der Pointer (11) mit der drahtlosen Multipunkt-Verbindung verbindbar ist, um als ein Abonnent der drahtlosen Multipunkt-Verbindung erkannt zu sein, die imstande ist, Informationen an andere Abonnenten dieser Verbindung zu übertragen oder Informationen von anderen Abonnenten zu erhalten.

2. Metalldetektor nach Anspruch 1, **dadurch gekennzeichnet, dass** die drahtlose Multipunkt-Verbindung derart konfiguriert ist, das der Pointer (11) Informationen über die drahtlose Multipunkt-Verbindung entweder mit dem Steuer- und Kontrollkasten (62) des Metalldetektors oder mit dem Bedienerheadset (21) oder unterschiedslos gemäß der gewählten Betriebsart mit dem einen oder dem anderen dieser Elemente austauschen kann.

3. Metalldetektor nach einem der Ansprüche 1 oder 2, **dadurch gekennzeichnet, dass** sein Steuer- und Kontrollkasten (62) derart konfiguriert ist, dass der Pointer (11) über diesen Kasten (62) mit externen Ausrüstungen kommunizieren kann.

4. Metalldetektor nach einem der Ansprüche 1 bis 3, **dadurch gekennzeichnet, dass** die von dem Pointer (11) übertragenen Informationen Informationen aufweisen, welche die Nichtberücksichtigung des von dem Detektionskopf (63) des Metalldetektors (61) übertragenen Detektionssignals aufweisen.

5. Metalldetektor nach einem der Ansprüche 1 bis 3, **dadurch gekennzeichnet, dass** die von dem Pointer (11) übertragenen Informationen Informationen aufweisen, welche das Einstellen der von dem Detektionskopf (63) des Metalldetektors (61) durchgeführten Sendung aufweisen.

6. Metalldetektor nach einem der Ansprüche 1 bis 5, **dadurch gekennzeichnet, dass** die Steuermittel des Pointers (11) derart konfiguriert sind, dass mindestens bestimmte Funktionen des Steuer- und Kontrollkastens (62) des Metalldetektors (61) gesichert sind, um sich an dessen Stelle zu setzen.

7. Metalldetektor nach einem der vorangehenden Ansprüche, **dadurch gekennzeichnet, dass** die von den Steuermitteln des Pointers (11) an das Bedienerheadset (21) übertragenen Informationen aus einem Signal bestehen, das die Detektion eines Objekts in der von dem Pointer (11) gepointeten Richtung anzeigt.

8. Metalldetektor nach Anspruch 7, **dadurch gekennzeichnet, dass** die von den Steuermitteln des Pointers (11) an das Bedienerheadset (21) übertragenen Informationen ebenfalls Informationen aufweisen, die sich auf den Funktionszustand und auf die Funktionskonfiguration des Pointers beziehen.

9. Metalldetektor nach einem der Ansprüche 7 oder 8, **dadurch gekennzeichnet, dass** das Bedienerheadset (21) Mittel aufweist, um automatisch oder auf Befehl des Bedieners das von den Steuermitteln des Pointers (11) übertragene Signal oder das von dem Steuerkasten (32) des Metalldetektors (31) übertragene Detektionssignal auszuwählen.

10. Metalldetektor nach einem der vorangehenden Ansprüche, **dadurch gekennzeichnet, dass** die drahtlose Multipunkt-Verbindung eine Verbindung vom Typ Bluetooth™ ist.

## Claims

1. A metal detector, of the type including:
- a support stick (64),
- a detection head (63) placed at the end of the support stick (64), said detection head including a transmitting coil and a receiving coil, the transmitting coil being energized by an excitation signal,
- an electronic command and control unit (62) making it possible to manage the operation of the detection head (63) and to use the information coming from the latter,
- an operator headset (21) allowing the detector to send the operator an audio detection signal,
the electronic command and control unit (62) and the operator headset (21) being connected to one another by a multi-point wireless link,
**characterized in that** it further includes a proximity locater (11), or pointer (11), in turn including a detection coil, as well as command means configured to generate an excitation signal and to send said signal to its own detection coil, detect echoes coming from metal objects from electromagnetic signals detected by its detection coil, and indicate to the operator that a detection is being done;
the command means being provided with wireless communication means configured such that the pointer (11) can be connected to the multipoint wireless link to be seen as a subscriber of the multipoint wireless link capable of transmitting information to other subscribers of said link or of receiving information from other subscribers.

2. The metal detector according to claim 1, **characterized in that** the multipoint wireless link is configured such that the pointer (11) can exchanger information, via the multipoint wireless link, either with the command and control unit (62) of said metal detector, or with the operator headset (21), or indifferently, depending on the selected operating mode, with one or the other of these elements.

3. The metal detector according to one of claims 1 or 2, **characterized in that** its command and control unit (62) is configured such that the pointer (11) can communicate with outside equipment via said unit (62).

4. The metal detector according to any one of claims 1 to 3, **characterized in that** the information transmitting by the pointer (11) including information requesting that the detection signal transmitted by the detection head (63) of the metal detector (61) not be taken into account.

5. The metal detector according to any one of claims 1 to 3, **characterized in that** the information send by the pointer (11) includes information requesting the cessation of the transmission done by the detection head (63) of the metal detector (61).

6. The metal detector according to any one of claims 1 to 5, **characterized in that** the control means of the pointer (11) are configured so as to perform at least some of the functions of the command and control unit (62) of said metal detector (61) to replace the latter.

7. The metal detector according to any one of the preceding claims, **characterized in that** the information sent by the command means of the pointer (11) to the operator headset (21) consist of a signal indicating the detection of an object in the direction pointed to by the pointer (11).

8. The metal detector according to claim 7, **characterized in that** the information transmitted by the command means of the pointer (11) to the operator headset (21) also includes information relative to the operating state and the functional configuration of said pointer.

9. The metal detector according to one of claims 7 or 8, **characterized in that** the operator headset (21) includes means for selecting, automatically or on command from the operator, the detection signal transmitted by the command means of the pointer (11) or the detection signal transmitted by the command unit (32) of the metal detector (31).

10. The metal detector according to any one of the preceding claims, **characterized in that** the multipoint wireless link it a link of the Bluetooth™ type.
